# EUROPEAN PATENT APPLICATION

(11) **EP 2 940 979 A1**
(43) Date of publication of application: **04.11.2015**
(21) Application number: 14305654.7
(22) Date of filing: 02.05.2014
(51) Int. Cl.: H04M 3/56, H04M 3/487, H04M 7/00

(54) **Process for managing the connection of users through their terminals to a multimedia conference session**

(71) Applicant: ALCATEL LUCENT, 92100 Boulogne-Billancourt (FR)
(72) Inventor: Schwebel, Luc, 67400 Illkirch (FR)
(74) Representative: Sayettat, Julien Christian

(57) **Abstract**

Process for managing the connection of users through their terminals to a multimedia conference session provided by a multimedia conference service in a network, said process providing, as a user connects to said session, for muting said user in said session, for broadcasting a multimedia content on the terminal of said user, said process further providing for, as an activity event happens into said session, for temporarily interrupting said broadcasting and for unmuting said user in said session.

## Description

The invention relates to a process for managing the connection of users through their terminals to a multimedia conference session provided by a multimedia conference service in a network, as well as a collaboration server for implementing such a process, an architecture for implementing such a multimedia conference service and a terminal for allowing a user to connect to such a multimedia conference session.

When a multimedia conference session is organized between several users, there is always a starting period wherein users connect to said session, for example by connecting their terminals to a telephonic bridge, before the conference really starts.

This starting period can be considered as wasted time, unless the conference organizer who has created the session uses it to broadcast multimedia content to users who are waiting for the conference, so as to communicate to said users some useful information, such as advertising, subject introduction or conference guide.

To do so, the conference organizer generally starts the conference by himself via the broadcasting of preliminary multimedia content to all users who are already connected to the session, as most of expected participants are connected.

However, this solution is not satisfactory, as it requires the presence of the conference organizer, so that users connected to the session before said conference organizer still have a period of time wherein nothing happens. Moreover, users who connect late to the session will not see the complete multimedia content.

Embodiments of the invention aim to improve the prior art by proposing a solution to manage automatically and asynchronously the broadcasting of a multimedia content to users who connect to a multimedia conference session before the starting of the conference, so that said users can usefully wait said starting by watching a multimedia content from its beginning, and thus regardless of when said users join the session.

To that purpose, and according to a first aspect, the invention relates to a process for managing the connection of users through their terminals to a multimedia conference session provided by a multimedia conference service in a network, said process providing, as a user connects to said session, for muting said user in said session, for broadcasting a multimedia content on the terminal of said user, said process further providing for, as an activity event happens into said session, for temporarily interrupting said broadcasting and for unmuting said user in said session.

According to a second aspect, the invention relates to a collaboration server for managing the connection of users through their terminals to a multimedia conference session provided by a multimedia conference service in a network, said collaboration server comprising a global collaboration device comprising means for interacting with a media server and/or with the terminal of a user during the connection of said user to said session, so as to mute said user in the session and/or to broadcast on said terminal a multimedia content provided by said media server, said global collaboration device further comprising:
- at least one detection module for detecting an activity event which happens into said session;
- an activity trigger module comprising means for sending a notification to said terminal upon such a detection, so as to temporarily interrupt said broadcasting on said terminal and to unmute said user in said session.

According to a third aspect, the invention relates to an architecture for implementing a multimedia conference service that provides in a network a multimedia conference session to which users can connect through their terminals, said architecture comprising:
- a media server comprising means for storing multimedia contents;
- a collaboration server for managing the connection of users to the multimedia conference session, said collaboration server comprising a global collaboration device comprising means for interacting with said media server and/or with the terminal of a user during the connection of said user to said session, so as to mute said user in the session and/or to broadcast a multimedia content on said terminal, said global collaboration device further comprising:
   ■ at least one detection module for detecting an activity event which happens into said session;
   ■ an activity trigger module comprising means for sending a notification to said terminal upon such a detection, so as to temporarily interrupt said broadcasting on said terminal and to unmute said user in said session.

According to a fourth aspect, the invention relates to a terminal for allowing a user to connect to a multimedia conference session provided in a network by a multimedia conference service implemented by such an architecture, said terminal comprising:
- a local collaboration device for allowing a user to connect to the multimedia conference session;
- at least one media player device for broadcasting a multimedia content provided by the media server upon said connection;
- a collaboration controller module for interacting with the global collaboration device for muting said user in said session upon said connection;
- an activity handler module for receiving a notification sent by the activity trigger module as an activity event happens in said session;
- a controller module for managing said connection, said controller module being adapted, upon the receipt of the notification by said activity handler module, for interacting with said media player device for temporarily interrupting the broadcasting and for interacting with said collaboration controller module for unmuting said user in said session.

Other aspects and advantages of the invention will become apparent in the following description made with reference to the appended figures, wherein:
- figures 1 and 2 represent schematically architectures according to the invention for implementing a multimedia conference service;
- figures 3, 4, 5 represent schematically different embodiments of a process according to the invention.

In relation to those figures, a process for managing the connection of users 1, 1a through their terminals 2 to a multimedia conference session provided by a multimedia conference service in a network, such as a collaboration server 7 for implementing such a process, an architecture 3 for implementing such a multimedia conference service and a terminal 2 for allowing a user 1 to connect to such a multimedia conference session, would be described below.

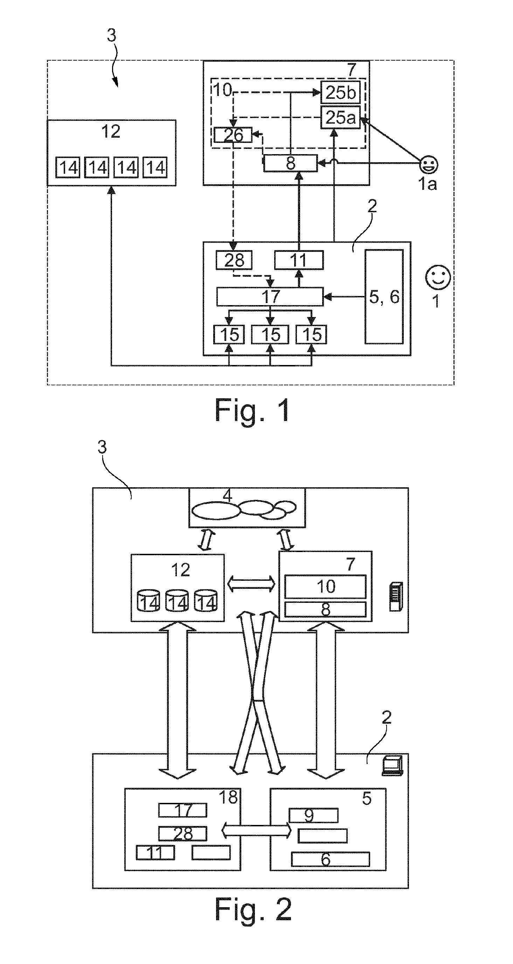

In relation to figure 2, the architecture 3 comprises a conference manager device 4 comprising means for allowing a conference organizer to create a session for a multimedia conference.

Moreover, the terminal 2 comprises a local collaboration device 5 for allowing his user to connect to the multimedia conference session. In relation to figure 2, the local collaboration device 5 comprises a module 6 for implementing an interface 6a, such as a Graphical User interface (GUI), for allowing a user 1 to connect to the session, for example by activating an interactive button on said interface.

Besides, the architecture 3 comprises a collaboration server 7 for managing the connection of users 1, 1 a to the multimedia conference session. In relation to figure 2, the collaboration server 7 comprises a device 8 to implement an Application Programming interface (API) which is adapted to interact with the conference manager device 4 for creating the multimedia conference session, and thus to interact with the terminal 2 of the user 1 for managing the connection of said user to the session, notably upon the receipt of a request 13 for connection sent by said terminal.

In the same way, the local collaboration device 5 of the terminal 2 comprises a module 9 to implement an API interface to interact with the API module 8 of the collaboration server 7, so as to display a conference interface on said terminal upon its connection to the session.

The process provides, as a user 1 connects to the session, for muting said user in said session. To do so, the collaboration server 7 comprises a global collaboration device 10 comprising means for interacting with the terminal 2 of the user 1 during the connection of said user to the session, so as to mute said user in said session.

Moreover, the terminal 2 comprises a collaboration controller module 11 for interacting with the global collaboration device 10 for muting the user 1 in the session. In particular, the collaboration controller module 11 comprises means for implementing an API interface to interact with the global collaboration device 10, notably through the API device 8, for muting the user 1 in the conference.

In the same time, the process provides for broadcasting a multimedia content on the terminal 2 of the user 1. To do so, the architecture 3 comprises a media server 12 comprising means for storing multimedia contents and the global collaboration device 10 comprising means for interacting with the media server 12 to broadcast a multimedia content on the terminal 2.

Generally speaking, the global collaboration device 10 manages all telephonic and web client activities events in the conference, such as the sharing of documents, the chat messages or the oral conversations between users 1, 1 a within said session.

In particular, the global collaboration device 10 is adapted to interact with the media server 12 so that the multimedia content will be provided from its beginning to each user 1, 1 a connecting to the session, and thus whatever the time when said connection happens. Thus, even if a user 1, 1 a connects to the session in advance, just in time or late, he will see the chosen multimedia content broadcast on his terminal 2 in logical order according to how said user is connected to the session.

The multimedia contents can be dedicated background picture files, video clip files or slide presentation files such as PowerPoint® files, and the conference organizer can previously select multimedia contents to be broadcast a long time before the starting of the conference, especially during the creation of the session for said conference. Thus, the conference organizer can share some projects and discussions with other users 1, 1 a just after their connection to the session and before the real starting of the conference, which can constitute a useful introduction to said conference. Moreover, the conference organizer has not to manage manually the diffusion of his selection of multimedia contents.

To do so, the media server 12 comprises at least one media repository 14 for storing multimedia contents, the conference manager device 4 comprising means for allowing the conference organizer to previously select a multimedia content to be broadcast as such and means for interacting with the media server 12 to store said selected multimedia content in said media repository.

Moreover, the terminal 2 comprises at least one media player device 15 for broadcasting a multimedia content provided by the media server 12 upon connection of the user 1 to the session.

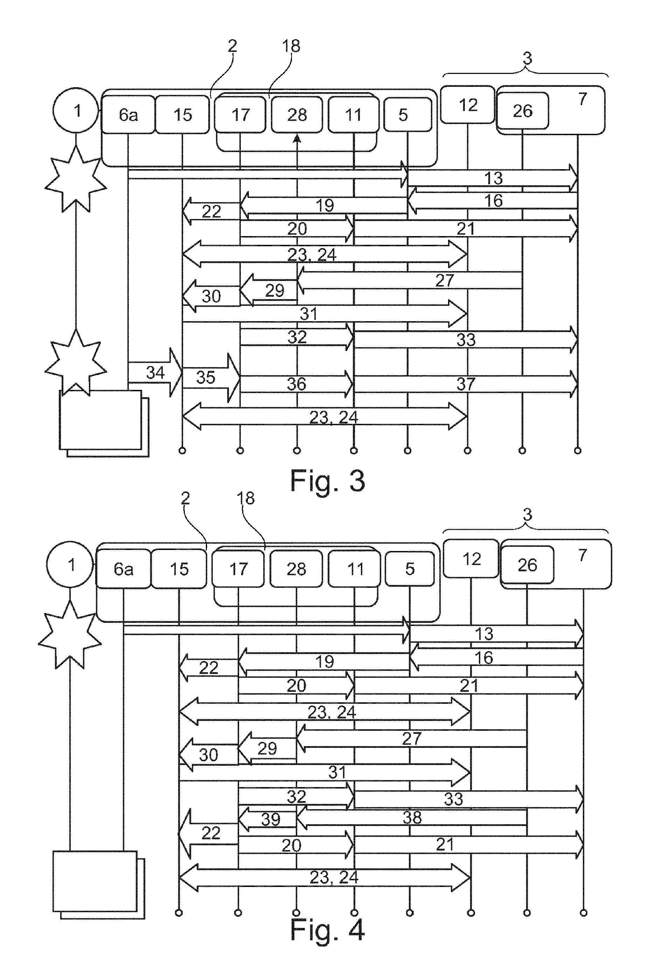

In relation to figures 3 to 5, when a user 1 connects to the session, he interacts with the local collaboration device 5 through the GUI interface 6a provided by said local collaboration device and displayed on his terminal 2, so that said local collaboration device interacts the global collaboration device 10 of the collaboration server 7 for managing said connection, for example by sending a dedicated request 13 towards said collaboration server. Moreover, the global collaboration device 10 sends back to the local collaboration device 5 a notification 16 comprising specific parameters for the connection to the session.

The terminal 2 also comprises a controller module 17 for managing the connection of the user 1 to the session, said controller module comprising means for interacting notably with the local collaboration device 5, the collaboration controller module 11 and the media player device 15 for such a session management.

In relation to figures 2 to 5, the terminal 2 comprises a controller device 18 wherein the controller module 17 and the collaboration controller module 11 are implemented.

In particular, in relation to figures 3 to 5, the local collaboration device 5 sends to the controller module 17 a notification 19 of connection upon the reception of the notification 16 with connection parameters sent by the global collaboration device 10. Thus, the controller module 17 interacts with the collaboration controller module 11 by sending a notification 20, so that said collaboration controller module sends a notification 21 to at least one global collaboration device 10 of the collaboration server 7 for muting the user in the session.

In the same time, the controller module 17 sends a notification 22 to at least one media player device 15 adapted to the multimedia content to be broadcast, and said media player device sends to the media server 12 a request 23 for said multimedia content, to which said media server responds by sending back a multimedia flow 24 comprising said multimedia content.

The process further provides for, as an activity event happens into the session, for temporarily interrupting the broadcasting of the multimedia content and for unmuting the user in the session.

To do so, in relation to figure 1, the global collaboration device 7 comprises at least one detection module 25a, 25b for detecting an activity event which happens into the session, which is notably the case when the user 1 himself and/or another user 1a starts speaking in the session or when a document is presented or shared in said session.

In particular, the global collaboration device 10 comprises a voice detector module 25a for detecting the voice of a user 1, 1 a in the session, said voice detection device being adapted to detect an activity event as said user starts to speak in said session.

Moreover, the global collaboration device 10 comprises a sharing detector module 25b for detecting as an activity event the presentation/sharing of a document by a user 1, 1 a in the multimedia conference session. To do so, the sharing detector module 25b comprises means for interacting with the API device 8, through which users 1, 1a can present or share documents in the multimedia conference session, for detecting such an activity event.

In relation to figure 1, the global collaboration device 10 also comprises an activity trigger module 26 comprising means for sending a notification 27 to the terminal 2 upon detection of an activity event in the session.

Moreover, the terminal 2 comprises an activity handler module 28 for receiving the notification 27 of the activity trigger module 26, and the controller module 17 is adapted, upon the receipt of said notification by said activity handler module, for interacting with the media player device 15 and with the collaboration controller module 11 for temporarily interrupting the broadcasting of the multimedia content and for unmuting the user in the session. In relation to figure 2, the activity handler module 28 is implemented in the controller device 18 along with the collaboration controller module 11 and the controller module 17.

In relation to figures 3 and 4, the activity handler module 28 sends a notification 29 to the controller module 17 as an activity event happens in the session. Thus, the controller module 17 sends a notification 30 to the media player device 15 for temporarily interrupting the broadcasting of the multimedia content, said media player device also sending a notification 31 to the media server 12 for temporarily stopping the sending of the multimedia flow 24 comprising said multimedia content.

Moreover, the controller module 17 sends a notification 32 to the collaboration controller module 11, so that said collaboration controller module sends a dedicated notification 33 to the global collaboration device 10 for unmuting the user in the session.

The process also provides for allowing the user 1 to restart the broadcasting of the multimedia content if he wishes, said user being automatically muted in the session upon such a restarting. To do so, the local collaboration device 5 comprises means for allowing the user 1 to request the restarting of the broadcasting, for example by displaying on the conference interface 6a an interactive play button the user 1 can activate for such a restarting. Thus, the controller module 17 interacts with the collaboration controller module 11 for muting the user in the session upon such a restarting.

In relation to figure 3, the local collaboration module 5 sends through the user interface 6a to the media player device 15 which has started and stopped to broadcast the multimedia content a notification 34 for restarting said broadcasting at the time of the last temporarily interruption. The media player device 15 thus sends to the media server 12 a new request 23 to which said media server replies by restarting the sending of the multimedia flow 24 from the temporarily interruption.

The media player device 12 also sends to the controller module 17 a notification 35 for indicating that the broadcasting has been restarted, so that the controller module 17 sends a new notification 20 for muting to the collaboration controller module 11 and said collaboration controller module sends a new notification 21 to the global collaboration device 10 to mute the user 1 in the session.

Thus, the user 1 can choose to temporarily stop his participation to the conference for watching the multimedia contents without exiting said conference, as he still remains connected to the session.

The process also provides for muting the user 1 in the session and for restarting the broadcasting of the multimedia content when no activity event has happened in the session for a predefined period of time, i.e. when no user 1, 1 a has spoken and/or sent any message and/or shared any document in said session for said period of time. Thus, the user 1 can watch the multimedia content from the last temporarily interruption of its broadcasting, while waiting for a new activity event in the session.

To do so, the activity trigger module 26 is adapted to send to the terminal 2 of the user 1 a notification 38 when the detection module 25a, 25b has not detected any activity event in the session for the predefined period of time. For example, the predefined period of time can be of at least five seconds and can be defined by the conference organizer during the creation of the session.

In relation to figure 4, the activity trigger module 26 sends a notification 38 to the activity handler module 28 as no activity event has been detected by any detection module 25a, 25b for at least five seconds, so that the activity handler module 28 sends a notification 39 to the controller module 17. Thus, the controller module 17 sends a new notification 22 for broadcasting to the media player device 15 which has started and stopped to broadcast the multimedia content, so that said media player device sends to the media server 12 a new request 23 to which said media server replies by restarting the sending of the multimedia flow 24 from the last temporarily interruption.

In the same time, the controller module 17 sends a new notification 20 for muting to the collaboration controller module 11, so that said collaboration controller module sends a new notification 21 to the global collaboration device 10 to mute the user 1 in the session.

The process also provides for allowing the user 1 to interrupt the broadcasting of the multimedia content, said user being automatically unmuted in the session upon such an interruption. To do so, the local collaboration device 5 comprises means for allowing the user 1 to request the interruption of the broadcasting, for example by displaying on the conference interface 6a an interactive pause and/or an interactive stop button the user 1 can activate for such an interruption. Thus, the controller module 17 interacts with the collaboration controller module 11 for unmuting the user in the session upon such an interruption.

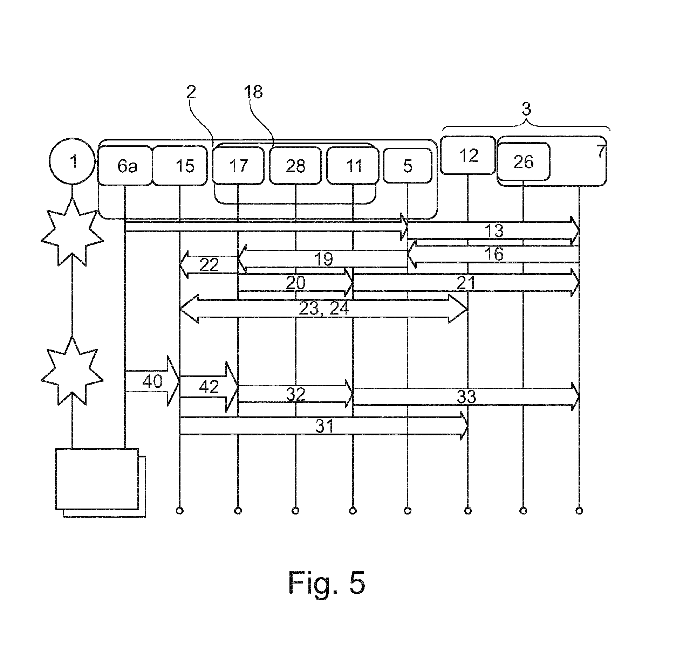

In relation to figure 5, the local collaboration module 5 sends through the user interface 6a to the media player device 15 which broadcasts the multimedia content a notification 40 for interrupting said broadcasting. The media player device 15 thus sends to the media server 12 a notification 31 so that said media server stops the sending of the multimedia flow 24.

The media player device 15 also sends to the controller module 17 a notification 42 for indicating that the broadcasting of the multimedia content has been interrupted, so that the controller module 17 sends a notification 32 for unmuting to the collaboration controller module 11 and said collaboration controller module sends a notification 33 to the global collaboration device 10 for unmuting the user 1 in the session.

Thus, each user 1, 1 a connecting to the multimedia conference session can benefit from an asynchronous and personalised control of the broadcasting of multimedia contents shared by the conference organizer as introduction to the conference. Moreover, with the detection of activity events and automatic interruption of multimedia content broadcasting, the conference keeps the priority and said broadcasting is given a real background status.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for managing the connection of users (1, 1a) through their terminals (2) to a multimedia conference session provided by a multimedia conference service in a network, said process providing, as a user (1) connects to said session, for muting said user in said session, for broadcasting a multimedia content on the terminal (2) of said user, said process further providing for, as an activity event happens into said session, for temporarily interrupting said broadcasting and for unmuting said user in said session.

2. Process according to claim 1, **characterized in that** it provides for allowing the user (1) to restart the broadcasting of the multimedia content, said user being automatically muted in the session upon such a restarting.

3. Process according to claim 1 or 2, **characterized in that** it provides for muting the user (1) in the session and for restarting the broadcasting of the multimedia content when no activity event has happened in the session for a predefined period of time.

4. Process according to any of claims 1 to 3, **characterized in that** it provides for allowing the user (1) to interrupt the broadcasting of the multimedia content, said user being automatically unmuted in the session upon such an interruption.

5. Process according to any of claims 1 to 4, **characterized in that** the session is created by a conference organizer, the multimedia content to be broadcast being previously selected by said conference organizer during the creation of said session.

6. Collaboration server (7) for managing the connection of users (1, 1a) through their terminals (2) to a multimedia conference session provided by a multimedia conference service in a network, said collaboration server comprising a global collaboration device (10) comprising means for interacting with a media server (12) and/or with the terminal (2) of a user (1) during the connection of said user to said session, so as to mute said user in the session and/or to broadcast on said terminal a multimedia content provided by said media server, said global collaboration device further comprising:
- at least one detection module (25a, 25b) for detecting an activity event which happens into said session;
- an activity trigger module (26) comprising means for sending a notification (27) to said terminal upon such a detection, so as to temporarily interrupt said broadcasting on said terminal and to unmute said user in said session.

7. Collaboration server (7) according to claim 6, **characterized in that** the global collaboration device (10) comprises a voice detector module (25a) for detecting the voice of a user (1, 1 a) in the multimedia conference session, said voice detector module being adapted to detect an activity event as said user starts to speak in said session.

8. Collaboration server (7) according to claim 6 or 7, **characterized in that** the global collaboration device (10) comprises a sharing detector module (25b) for detecting as an activity event the presentation/sharing of a document by a user (1, 1 a) in the multimedia conference session.

9. Collaboration server (7) according to any of claims 6 to 8, **characterized in that** the activity trigger module (26) is adapted to send to the terminal (2) of the user (1) a notification (38) when the detection module (25, 25a, 25b) has not detected any activity event in the session for a predefined period of time, so as to mute said user in the session and to restart the broadcasting of the multimedia content on said terminal.

10. Architecture (3) for implementing a multimedia conference service that provides in a network a multimedia conference session to which users (1, 1a) can connect through their terminals (2), said architecture comprising:
- a media server (12) comprising means (14) for storing multimedia contents;
- a collaboration server (7) for managing the connection of users (1, 1 a) to the multimedia conference session, said collaboration server comprising a global collaboration device (10) comprising means for interacting with said media server and/or with the terminal (2) of a user (1) during the connection of said user to said session, so as to mute said user in the session and/or to broadcast a multimedia content on said terminal, said global collaboration device further comprising:
■ at least one detection module (25a, 25b) for detecting an activity event which happens into said session;
■ an activity trigger module (26) comprising means for sending a notification (27) to said terminal upon such a detection, so as to temporarily interrupt said broadcasting on said terminal and to unmute said user in said session.

11. Architecture (3) according to claim 10, **characterized in that** it comprises a conference manager device (4) for allowing a conference organizer to create the multimedia conference session, said conference manager device comprising means for allowing said conference organizer to previously select during the creation of said session a multimedia content to be broadcast.

12. Terminal (2) for allowing a user (1) to connect to a multimedia conference session provided in a network by a multimedia conference service implemented by an architecture (3) according to claim 10 or 11, said terminal comprising:
- a local collaboration device (5) for allowing a user (1) to connect to the multimedia conference session;
- at least one media player device (15) for broadcasting a multimedia content provided by the media server (12) upon said connection;
- a collaboration controller module (11) for interacting with the global collaboration device (10) for muting said user in said session upon said connection;
- an activity handler module (28) for receiving a notification (27) sent by the activity trigger module (26) as an activity event happens in said session;
- a controller module (17) for managing said connection, said controller module being adapted, upon the receipt of the notification (27) by said activity handler module, for interacting with said media player device for temporarily interrupting the broadcasting and for interacting with said collaboration controller module for unmuting said user in said session.

13. Terminal (2) according to claim 12, **characterized in that** the local collaboration device (5) comprises means for allowing the user (1) to request the restarting of the broadcasting, the controller module (17) interacting with the collaboration controller module (11) for muting said user in the session upon such a restarting.

14. Terminal (2) according to claim 12 or 13, **characterized in that** the local collaboration device (5) comprises means for allowing the user (1) to request the interruption of the broadcasting, the controller module (17) interacting with the collaboration controller module (11) for unmuting said user in the session upon such an interruption.
